# EUROPÄISCHE PATENTSCHRIFT

(11) **EP 1 700 500 B1**
(45) Veröffentlichungstag und Bekanntmachung des Hinweises auf die Patenterteilung: **05.03.2008**
(21) Anmeldenummer: 04791291.0
(22) Anmeldetag: 22.10.2004
(51) Int. Cl.: H04Q 7/22, H04Q 7/28, G07C 13/00

(54) **VERFAHREN ZUR DURCHFUEHRUNG EINER UMFRAGE UNTER MEHREREN BETEILIGTEN KOMMUNIKATIONSGERAETEN, SOWIE ZUGEHOERIGE KOMMUNIKATIONSGERAETE**
METHOD FOR CARRYING OUT A SURVEY OF A PLURALITY OF PARTICIPANT COMMUNICATION DEVICES, AND CORRESPONDING COMMUNICATION DEVICES
PROCEDE DE REALISATION D'UNE ENQUETE AUPRES D'UNE PLURALITE D'APPAREILS PARTICIPANTS DE COMMUNICATION, ET APPAREILS DE COMMUNICATION CORRESPONDANTS

(30) Priorität: 02.01.2004 DE 102004001013
(43) Veröffentlichungstag der Anmeldung: 13.09.2006
(73) Patentinhaber: Nokia Siemens Networks GmbH & Co. KG, 81541 München (DE)
(72) Erfinder: KOWALEWSKI, Frank, 38228 Salzgitter (DE); LUFT, Achim, 38120 Braunschweig (DE)
(86) Internationale Anmeldenummer: PCT/EP2004/052632
(87) Internationale Veröffentlichungsnummer: WO 2005/067326

(56) Entgegenhaltungen:
- WO-A-98/09451
- WO-A-98/52340
- ERICSSON, MOTOROLA, SIEMENS, NOKIA: "Push-to-talk over Cellular (poC) Architecture" TECHNICAL SPECIFICATION ARCHITECTURE V1.1.0, [Online] August 2003 (2003-08), Seiten 1-23, XP002316373 2003-08 Gefunden im Internet: URL:http://www.ericsson.com/multiservicene tworks> [gefunden am 2005-02-04]

## Beschreibung

Handelsübliche Sprechfunkgeräte, die beispielsweise unter dem Namen Walkie-Talkie bekannt sind, ermöglichen es, Sprachnachrichten an einen oder mehrere Gesprächsteilnehmer in Echtzeit zu versenden. Während des Sprechens drückt dabei der Sendende eine spezielle Sprechtaste. Dadurch sperrt er andere beteiligte Teilnehmer für das Sprechen. Die Übertragung erfolgt also nach einem Halb-Duplex-Verfahren. Kommunikationsdienste nach Art des Halb-Duplex-Verfahrens bezeichnet man auch als PTT-Dienste (PTT- Push To Talk). Die heutigen Push-to-Talk-Dienste erlauben zumeist nur eine Übermittlung von Sprachnachrichten. Eine mögliche Spezifikation für ein PTT-System ist beispielsweise in dem Dokument "Push-to-Talk over Celluar (PoC), Architecture v.1.1.0, PoC Release 1.0, unter "http://www.ericsson.com/multiservicenetworks/distr/PoC_specifications.ZIP" angegeben.

Aus der WO 98/09451 ist ein Verfahren zur Durchführung einer Umfrage in einem Mobilfunknetz bekannt, bei dem eine Fragestellung durch ein Kommunikationsgerät an ein Servicecenter gesendet und von dort an mindestens zwei Empfänger übermittelt wird.

Der Erfindung liegt die Aufgabe zugrunde, eine Umfrage unter mehreren beteiligten Kommunikationsgeräten in einfacher Weise durchzuführen. Diese Aufgabe wird durch folgendes erfindungsgemäßes Verfahren gelöst:

Verfahren zur Durchführung einer Umfrage unter mehreren beteiligten Kommunikationsgeräten, indem nur jeweils einem dieser Kommunikationsgeräte aufgrund seines spezifischen Anfragesignal ein exklusives Senderecht zur Übertragung von mindestens einer Nutznachricht für eine Berechtigungszeitdauer zugewiesen wird, während der den anderen beteiligten Kommunikationsgeräten lediglich ein Empfangsrecht von mindestens einer Nutznachricht zugeordnet wird, und indem von dem zum Senden berechtigten Kommunikationsgerät für die Umfrage unter den beteiligten Kommunikationsgeräten ein zeitliches Antwortfenster festgelegt wird, innerhalb dem es dem jeweilig beteiligten Kommunikationsgerät ermöglicht wird, sein jeweiliges Antwortsignal auf die Umfrage dadurch abzugeben, dass von ihm als Antwortsignal sein eigenes spezifisches Anfragesignal zur Anforderung des exklusiven Senderechts mindestens einmal geschickt wird.

Dadurch, dass das jeweilig beteiligte Kommunikationsgerät sein jeweiliges Antwortsignal auf die Umfrage dadurch abgibt, dass von ihm als Antwortsignal sein eigenes spezifisches Anfragesignal mindestens einmal geschickt wird, ist es möglich, die bereits bestehenden Funktionalitäten der beteiligten Kommunikationsgeräte ohne Modifikationen zur Durchführung einer Umfrage zu benutzen. Somit können bereits im Einsatz befindliche Kommunikationsgeräte ohne spezielle Modifikation zur Durchführung einer Umfrage verwendet werden.

Durch das erfindungsgemäße Verfahren können in vorteilhafter Weise verschiedene Arten von Umfragen realisiert werden. Dazu zählen Umfragen mit Ja/Nein-Antworten, mit einer Antwort aus mehreren möglichen Antworten, mit Mehrfachantworten aus mehreren möglichen Antworten oder auch mit Antworten, die die Eingabe eines Textes benötigen. Der Text wird beispielsweise in Form eines Morsecodes am Kommunikationsgerät eingegeben.

Des Weiteren wird eine einfache Handhabung der Durchführung einer Umfrage, sowohl für das zum Senden berechtigte Kommunikationsgerät, das die Umfrage initiiert, als auch für die anderen beteiligten Kommunikationsgeräte, die an der Umfrage teilnehmen, erreicht.

Die Erfindung betrifft auch ein zum Senden berechtigtes Kommunikationsgerät zum Durchführen einer Umfrage unter mehreren beteiligten Kommunikationsgeräten mit einer Empfangseinheit zum Entgegennehmen seines exklusiven Senderechts zur Übertragung von mindestens einer Nutznachricht aufgrund seines spezifischen Anfragesignals für eine Berechtigungszeitdauer, während der den anderen beteiligten Kommunikationsgeräten lediglich ein Empfangsrecht von mindestens einer Nutznachricht zuordenbar ist, mit einer Verarbeitungseinheit zum Festlegen eines zeitlichen Antwortfensters, innerhalb dem es allen an der Umfrage beteiligten Kommunikationsgeräten ermöglicht ist, jeweils sein Antwortsignal auf die Umfrage dadurch abzugeben, dass von ihm als Antwortsignal sein eigenes spezifisches Anfragesignal zur Anforderung des exklusiven Senderechts mindestens einmal geschickt wird, und mit einer Sendeeinheit, mittels der durch mindestens einmaliges Absenden eines eigenen spezifischen Anfragesignals zur Anforderung eines exklusiven Senderechts sein Antwortsignal absendbar ist.

Weiterhin betrifft die Erfindung auch ein zum Empfang berechtigtes Kommunikationsgerät zum Durchführen einer Umfrage unter mehreren beteiligten Kommunikationsgeräten mit einer Sendeeinheit, mittels der durch mindestens einmaliges Absenden eines eigenen spezifischen Anfragesignals zur Anforderung eines exklusiven Senderechts sein Antwortsignal absendbar ist.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung eine Anordnung zur Durchführung einer Umfrage unter mehreren beteiligten Kommunikationsgeräten nach einer ersten Variante des erfindungsgemäßen Verfahrens sowie zugehörige Modifikationen, und
- Figuren 2 mit 5: verschiedene Varianten von Antwortsignalen, die durch das jeweilig antwortende Kommunikationsgerät bei der Durchführung verschiedener Varianten des erfindungsgemäßen Umfrage-Verfahrens abgegeben werden können.

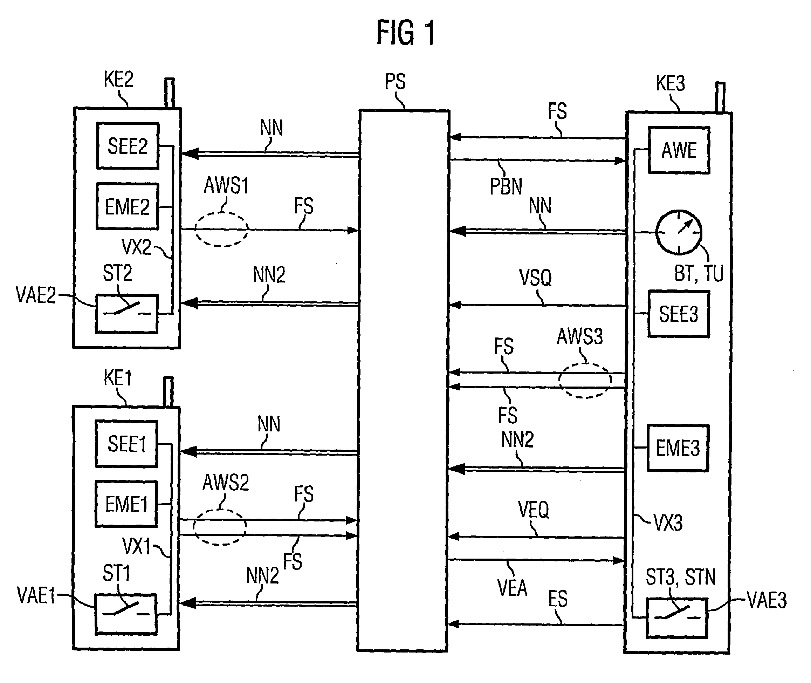

Elemente mit gleicher Funktion und Wirkungsweise sind in den Figuren 1 mit 5 mit denselben Bezugszeichen versehen.

In Figur 1 ist ein Ausführungsbeispiel für ein PTT-System (Push-to-Talk) abgebildet. Ein Dienst eines PTT-Systems wird als PTT-Dienst bezeichnet. Eine mögliche Spezifikation für ein PTT-System ist beispielsweise in dem Dokument "Push-to-Talk over Celluar (PoC), Architecture v.1.1.0, PoC Release 1.0, unter "http://www.ericsson.com/multiservicenetworks/distr/PoC_specifications.ZIP" angegeben.

Dieses Push-to-Talk-System ist sternförmig organisiert. In der Mitte von Figur 1 findet sich ein zentraler PTT-Server PS, der mit allen beteiligten Kommunikationsgeräten KE1, KE2, KE3 in Verbindung steht. Der PTT-Server PS steuert den PTT-Dienst und verteilt die relevanten Kommunikationssignale an die beteiligten Kommunikationsgeräte KE1, KE2, KE3.

Im Rahmen der Erfindung umfasst der Begriff Kommunikationsgerät ein Mobilfunkgerät nach dem UMTS-Standard (UMTS - Universal Mobile Telecommunications System) oder nach dem GSM-Standard (GSM - Global System for Mobile). Nach einer weiteren Ausführungsform kann ein Kommunikationsgerät als Festnetzgerät realisiert sein, beispielsweise als ISDN-Endgerät (ISDN - Integrated Subscriber Digital Network) oder als eine an das öffentliche Internet und/oder Intranet angeschlossene Computereinheit.

Ein PTT-Dienst wird üblicherweise dadurch charakterisiert, dass nur jeweils einem der Kommunikationsgeräte wie beispielsweise KE3 ein exklusives Senderecht zum Übertragen von mindestens einer Nutznachricht, wie z.B. NN, NN2, für eine Berechtigungszeitdauer, wie z.B. BT, zugewiesen wird. Während dieser Berechtigungszeitdauer BT wird den anderen an der Umfrage beteiligten Kommunikationsgeräten, wie beispielsweise KE1 und KE2, lediglich ein Empfangsrecht von mindestens einer Nutznachricht NN, NN2 zugeordnet. Die Übertragung von Nutznachrichten NN, NN2 erfolgt hier nach einem Halb-Duplex-Verfahren. Die Nutznachricht NN, NN2 wird in Echtzeit an die empfangsberechtigten Kommunikationsgeräte KE1, KE2 zugestellt. Die Nutznachricht NN, NN2 kann unter Anderem multimediale Daten, wie beispielsweise Audiodaten, Videodaten oder Textdaten umfassen.

In Figur 1 hat das Kommunikationsgerät KE3 das exklusive Senderecht zur Übertragung von Nutznachrichten NN, NN2. Es umfasst eine Sendeeinheit SEE3 zum Verschicken eines oder mehrerer Signale und/oder Nachrichten sowie eine Empfangseinheit EME3 zum Entgegennehmen eines oder mehrerer Signale und/oder Nachrichten. Daneben gibt es eine Auswerteeinheit AWE zum Auswerten der Umfrage und eine Verwaltungseinheit VAE3, die beispielsweise die Umfrage steuert. Schließlich ist auch ein Verbindungsnetz VX3 vorhanden, welches den Austausch von Informationen zwischen den verschiedenen Einheiten SEE3, EME3, AWE und VAE3 dieses Kommunikationsgeräts KE3 ermöglicht.

Des Weiteren sind in Figur 1 die Kommunikationsgeräte KE1, KE2 lediglich zum Empfang von mindestens einer Nutznachricht NN, NN2 berechtigt. Sie haben jeweils eine Sendeeinheit SEE1, SEE2 zum Verschicken eines oder mehrerer Signale und/oder Nachrichten sowie jeweils eine Empfangseinheit EME1, EME2 zum Entgegennehmen eines oder mehrerer Signale und/oder Nachrichten. Weiterhin beinhalten sie auch jeweils eine Verwaltungseinheit VAE1, VAE2, um beispielsweise das jeweilige Antwortsignal AWS1, AWS2 zu erzeugen. Zusätzlich ist jeweils ein Verbindungsnetz VX1, VX2 vorgesehen, welches den Austausch von Informationen zwischen den verschiedenen Einheiten SEE1, EME1 und VAE1 bzw. SEE2, EME2 und VAE2 innerhalb des jeweiligen Kommunikationsgerätes KE1, KE2 erlaubt.

Im Folgenden wird der zeitliche Ablauf zur Durchführung einer Umfrage anhand von Figur 1 näher erläutert. Diese Umfrage wird von Kommunikationsgerät KE3 initiiert. Nachdem sich die an der Umfrage beteiligten Kommunikationsgeräte KE1, KE2, KE3 am PTT-Server PS angemeldet haben, schickt das Kommunikationsgerät KE3 sein spezifisches Anfragesignal FS an den PTT-Server PS. Damit fordert es das exklusive Senderecht zum Übertragen von Nutznachrichten NN, NN2 an. Daraufhin entscheidet der PTT-Server PS, ob dem anfragenden Kommunikationsgerät KE3 das exklusive Senderecht zugeteilt werden kann. Da keinem anderen Kommunikationsgerät KE1, KE2, KE3 das exklusive Senderecht zugewiesen ist, weist der PTT-Server PS dem anfragenden Kommunikationsgerät KE3 mittels einer positiven Bestätigungsnachricht PBN das exklusive Senderecht zu. Nun hat die sendeberechtigte Kommunikationseinheit KE3 innerhalb der Berechtigungszeitdauer BT die Möglichkeit, mindestens eine Nutznachricht NN, NN2 zu verschicken, oder auch mindestens eine Umfrage zu initiieren.

Zum Start der Umfrage übermittelt das sendeberechtigte Kommunikationsgerät mindestens eine Nutznachricht an den PTT-Server, der diese in Echtzeit an die empfangsberechtigten Kommunikationsgeräte weiterleitet. Diese Nutznachricht enthält eine Fragestellung und möglicherweise auch eine Auswahl an möglichen Antworten auf die Umfrage. Diese Nutznachricht kann gegebenenfalls in Form einer Sprachnachricht oder einer Textnachricht gestaltet sein. In diesem Ausführungsbeispiel schickt das Kommunikationsgerät KE3 die Nutznachricht NN mit folgende Fragestellung an den PTT-Server PS: "Wollen wir jetzt zum Essen gehen? Bitte antworten Sie mit Ja oder Nein.". Der PTT-Server PS leitet diese Nutznachricht NN sofort nach Erhalt an die Kommunikationsgeräte KE1, KE2 weiter.

Im Folgenden wird durch das zum Senden berechtigte Kommunikationsgerät ein zeitliches Antwortfenster gestartet, innerhalb dem es den an der Umfrage beteiligten Kommunikationsgeräten KE1, KE2, KE3 ermöglicht wird, ihr jeweiliges Antwortsignal AWS1, AWS2, AWS3 auf die Umfrage abzugeben. Es kann vorteilhaft sein, den Beginn des zeitlichen Antwortfensters z.B. mittels eines Tonsignals den an der Umfrage beteiligten Kommunikationsgeräten mitzuteilen. So kann beispielsweise durch Drücken einer Umfragetaste STN am zum Senden berechtigten Kommunikationsgerät KE3 ein erstes Tonsignal erzeugt werden. Dieses wird in die Nutznachricht NN eingefügt und an die anderen, an der Umfrage beteiligten Kommunikationsgeräte KE1, KE2 übertragen. In einer alternativen Variante wird eine Textnachricht an die an der Umfrage beteiligten Kommunikationsgeräte übertragen, die den Beginn des zeitlichen Antwortfensters TU anzeigt. In diesem Ausführungsbeispiel fügt das zum Senden berechtigte Kommunikationsgerät KE3 der Nutznachricht NN mit der Fragestellung noch folgender Text bei: "Bitte geben Sie ihre Antwort jetzt!".

Gleichzeitig oder vorab wird das zum Senden berechtigte Kommunikationsgerät K3 den PTT-Server PS über das Starten des zeitlichen Antwortfensters TU mittels einer Umfragestatusnachricht VSQ informieren. Der PTT-Server PS kann gegebenenfalls während des zeitlichen Antwortfensters TU keine neuen Kommunikationsgeräte für diesen PTT-Dienst zulassen. Zusätzlich kann er die innerhalb des zeitlichen Antwortfensters TU durch die an der Umfrage beteiligten Kommunikationsgeräte KE1, KE2, KE3 abgeschickten, spezifischen Anfragesignale FS für eine spätere Auswertung der Umfrage zwischenspeichern.

Nachdem das zeitliche Antwortfenster gestartet wurde, haben die an der Umfrage beteiligten Kommunikationsgeräte die Möglichkeit, ihr jeweiliges Antwortsignal auf die Umfrage abzugeben. Es ist vorteilhaft, dass als das spezifische Anfragesignal, wie z.B. FS, mindestens einmal abgeschickt wird. Im vorliegenden Ausführungsbeispiel wird die "Ja"-Antwort durch einmaliges Absenden des spezifischen Antwortsignals FS und die "Nein-Antwort" durch zweimaliges Abschicken des spezifischen Antwortsignals FS abgegeben. Das Kommunikationsgerät KE2 gibt als Antwort auf die Umfrage "Ja". Die Kommunikationsgeräte KE1, KE3 antworten mit "Nein". Somit schickt das Kommunikationsgerät KE2 für sein Antwortsignal AWS2 einmalig sein spezifisches Anfragesignal FS an den PTT-Server PS. Die anderen beiden Kommunikationsgeräte KE1 und KE3 übermitteln ihr jeweiliges spezifisches Anfragesignal FS je zweimal. Ihre Antwortsignale AWS1, AWS3 setzen sich also aus jeweils zwei spezifischen Anfragesignale FS zusammen, die in der Figur 1 durch einen gestrichelten Ring umschlossen sind.

Nach Erreichen des Endes des zeitlichen Antwortfensters werden keine weiteren Antwortsignale der an der Umfrage beteiligten Kommunikationsgeräte mehr berücksichtigt. Das Ende des zeitlichen Antwortfensters kann beispielsweise durch ein zweites Tonsignal angekündigt werden. Dieses wird durch das zum Senden berechtigte Kommunikationsgerät wie z.B. KE3 mittels einer weiteren Nutznachricht wie z.B. NN2 an den PTT-Server und dann an die anderen beteiligten Kommunikationsgeräte wie z.B. KE1 und KE2 geschickt. Daneben ist es auch möglich, dass das Ende des zeitlichen Antwortfensters beim Start des zeitlichen Antwortfensters festgelegt wird und nach der vorgegebenen Zeit automatisch abläuft. Alternativ kann es gegebenenfalls auch zweckmäßig sein, das Ende des zeitlichen Antwortfensters mittels einer Text- oder Bildnachricht den beteiligten Kommunikationsgeräten anzuzeigen. Im Ausführungsbeispiel von Figur 1 schickt das sendeberechtigte Kommunikationsgerät KE3 an den PTT-Server PS die Nutznachricht NN2, die das Ende des zeitlichen Antwortfensters TU anzeigt. Diese Nutznachricht NN2 beinhaltet die Sprachnachricht "Die Umfrage ist jetzt beendet!". Diese Nutznachricht NN2 wird sofort nach Erhalt durch den PTT-Server PS an die Kommunikationsgeräte KE1, KE2 weitergeleitet.

Nach Beendigung des zeitlichen Antwortfensters ruft das zum Senden berechtigte Kommunikationsgerät beim PTT-Server Statusinformationen, die sich auf die Umfrage beziehen, abrufen. Das zum Senden berechtigte Kommunikationsgerät fragt mittels einer Ergebnisanfragenachricht ab, wie viele Kommunikationsgeräte an der Umfrage beteiligt waren, und wie viele sich für die jeweilig zulässigen Antworten entschieden haben. Der PTT-Server antwortet daraufhin mit mindestens einer Ergebnisantwortantwortnachricht und übermittelt hiermit die angefragten Statusinformationen an das zum Senden berechtigte Kommunikationsgerät. Im Ausführungsbeispiel von Figur 1 fordert das Kommunikationsgerät KE3 mit der Ergebnisnachricht VEQ einige Statusinformationen bezüglich der Umfrage beim PTT-Server PS an. Der PTT-Server PS übermittelt die folgenden Statusinformationen mittels der Ergebnisantwortantwortnachricht VEA an das Kommunikationsgerät KE3:
- Anzahl der Kommunikationsgeräte die an der Umfrage teilgenommen haben: 3
- Anzahl der Kommunikationsgeräte, die jeweils ihr spezifisches Anfragesignal einmal während des zeitlichen Antwortfensters abgegeben haben: 1
- Anzahl der Kommunikationsgeräte, die jeweils ihr spezifisches Anfragesignal zweimal während des zeitlichen Antwortfensters abgegeben haben: 2

Diese Statusinformationen werden im zum Senden berechtigten Kommunikationsgerät mittels einer Auswerteeinheit ausgewertet. Daraus werden ein oder mehrere Umfrageergebnisse erstellt. Alternativ kann die Auswertung auch durch den Nutzer des sendeberechtigten Kommunikationsgerätes per Hand vorgenommen werden. Im Ausführungsbeispiel wertet die Auswerteeinheit AWE des Kommunikationsgeräts KE3 die Statusinformationen aus. Das Umfrageergebnis besagt, dass eines der drei beteiligten Kommunikationsgeräten KE1, KE2, KE3 mit "Ja" und zwei der drei beteiligten Kommunikationsgeräte KE1, KE2, KE3 mit "Nein" abgestimmt haben.

In einem weiteren Schritt können ein oder mehrere Umfragergebnisse beispielsweise an die an der Umfrage beteiligten Kommunikationsgeräte weitergeleitet werden. Es kann zweckmä-ßig sein, ein oder mehrere Umfrageergebnisse in Textform beispielsweise via SMS (SMS - Short Message Service) zu übermitteln. In dem vorliegenden Ausführungsbeispiel nach Figur 1 wird als Umfrageergebnis folgende Nachricht NN2 von Kommunikationsgerät KE2 an die Kommunikationsgeräte KE1, KE3 weitergeleitet: "Das Ergebnis der Umfrage lautet: NEIN".

Zum Schluss gibt das sendeberechtigte Kommunikationsgerät sein Senderecht zum Übermitteln von Nutznachrichten wieder ab. Dazu verschickt das sendeberechtigte Kommunikationsgerät KE3 eine Sendeendnachricht ES an den PTT-Server PS, worauf der PTT-Server PS das exklusive Sendrecht entzieht.

Das Erzeugen des spezifischen Anfragesignals kann durch Betätigen einer Taste an dem Kommunikationsgerät ausgelöst werden. Das spezifische Anfragesignal kann mittels einer Sendeeinheit abgeschickt werden. Es ist in der Praxis vorteilhaft, diese Taste auch zur Abgabe des Antwortsignals zu benutzen. In Figur 1 wird das jeweilige spezifische Anfragesignal FS durch Drücken der jeweiligen Taste ST1, ST2, ST3 am jeweiligen Kommunikationsgerät KE1, KE2, KE3 ausgelöst. Die jeweilige Taste ST1, ST2, ST3 ist innerhalb der jeweiligen Verwaltungseinheit VAE1, VAE2, VAE3 untergebracht. Das jeweils erzeugte spezifische Anfragesignal FS wird dann mittels der jeweiligen Sendeeinheit SEE1, SEE2, SEE3 abgeschickt. In Figur 1 wird das jeweilige Antwortsignal AWS1, AWS2, AWS3 durch Drücken der jeweiligen Taste ST1, ST2, ST3 der Kommunikationsgeräte KE1, KE2, KE3 bewerkstelligt.

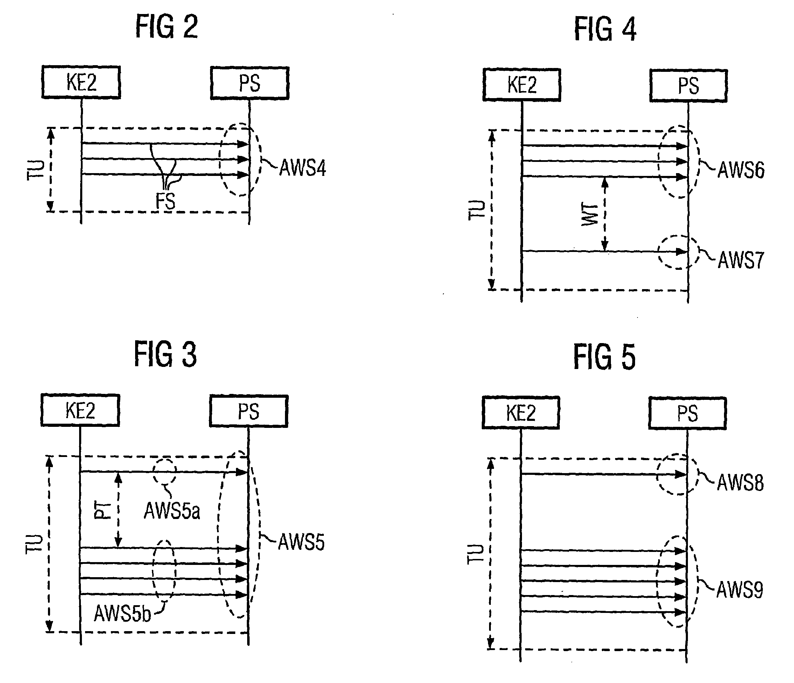

Weiterhin ist es mit dem erfindungsgemäßen Verfahren auch möglich, verschiedene Typen von Umfragen durch ein- oder mehrmaliges Senden des spezifischen Anfragesignals FS zu realisieren:
- Umfrage mit Ja/Nein-Antworten:
   Bei diesem Typ von Umfrage wird eine Ja- oder Nein-Antwort erwartet. Eine Ja-Antwort kann durch einmaliges Senden des spezifischen Anfragesignals FS angezeigt werden. Eine Nein-Antwort kann dadurch mitgeteilt werden, dass kein spezifisches Anfragesignal FS innerhalb des zeitlichen Antwortfensters TU geschickt wird. Generell werden die Ja/Nein Antwortsignale dadurch generiert, dass sich beide durch verschiedene Kombinationen von Versenden und/oder Nichtversenden eines oder mehrerer Anfragesignale FS unterscheiden.
- Umfrage mit einer Antwort aus mehreren Antwortmöglichkeiten:
   Hierbei kann das an der Umfrage beteiligte Kommunikationsgerät eine der möglichen Antworten abgeben. Das zu einer Antwort zugehörige Antwortsignal besteht aus einer Kombination von Versenden und/oder Nichtversenden von einem oder mehreren Anfragesignalen. Für jedes Antwortsignal wird eine eindeutige Kombination gewählt. Beispielsweise stehen vier Antworten zur Auswahl. Dabei wird die erste Antwort durch einmaliges, die zweite Antwort durch zweimaliges, die dritte Antwort durch dreimaliges und die vierte Antwort durch viermaliges Versenden des spezifischen Anfragesignals FS innerhalb des zeitlichen Antwortfensters TU ausgedrückt. Entsprechend Figur 2 entscheidet sich die antwortende Kommunikationseinheit KE2 für die dritte Antwort und sendet daher für sein Antwortsignal AWS4 sein spezifisches Anfragesignal FS dreimalig innerhalb des zeitlichen Antwortfensters TU.
- Umfrage mit mehr als einer Antwort aus mehreren Antwortmöglichkeiten:
   Hierbei kann das beteiligte Kommunikationsgerät mehr als eine Antwort aus mehreren möglichen Antworten innerhalb des zeitlichen Antwortfensters abgeben. Das zu einer bestimmten Antwort zugehörige Teilantwortsignal besteht aus einer Kombination von Versenden und/oder Nichtversenden von einem oder mehreren Anfragesignalen. Zur Abgabe mehrerer Antworten innerhalb des Antwortsignals werden diese Teilantwortsignale sequentiell hintereinander angeordnet. Zur Unterscheidung der einzelnen Antworten kann es zweckmäßig sein, eine Wartezeit PT zwischen der Abgabe der einzelnen Antworten zu berücksichtigen. Im Beispiel von Figur 3 stehen vier Antworten zur Auswahl, wobei die Antworten eins und vier abgegeben werden. Dazu verschickt das Kommunikationsgerät KE2 das erste Teilantwortsignal AWS5A, welches aus einem einzigen spezifischen Anfragesignal FS besteht. Nach einer Wartepause PT, beispielsweise 2 Sekunden, signalisiert das Kommunikationsgerät KE2 sein zweites Teilantwortsignal AWS5B, also Antwort vier, durch viermaliges Versenden seines spezifischen Anfragesignals FS. Somit setzt sich das Antwortsignal AWS5 für diese Umfrage aus dem ersten Teilantwortsignal AWS5A, gefolgt von einer Wartezeit PT und anschließend aus dem zweiten Teilantwortsignal AWS5B zusammen. Dieses Antwortsignal AWS5 wird innerhalb des zeitlichen Antwortfensters TU abgegeben.
- Umfrage mit Text- oder Buchstabenreihen als Antwort:
   Hierbei werden ein oder mehrere Buchstaben und/oder Zahlen als Antwort abgegeben. Beispielsweise ist ein bestimmtes Jahr oder der Name eines prominenten Schauspielers gefragt. Hierzu kann das beteiligte Kommunikationsgerät sein jeweiliges Antwortsignal dadurch abgeben, dass jedem Buchstaben und/oder jeder Ziffer eine eindeutige Kombination von Senden oder/und Nicht-Senden des spezifischen Anfragesignals FS eindeutig zugeordnet wird. Mit Hilfe von sequentiellem Übersenden von mehreren Buchstaben und/oder Ziffern lassen sich auch entsprechende Buchstaben- und/oder Zahlenreihen bilden. Diese eindeutige Zuordnung kann beispielsweise in Form eines Morsecodes realisiert werden. Alternativ oder zusätzlich kann die Eingabe der Buchstaben und/oder Ziffern mit Hilfe eines Tastenfeldes erfolgen, wobei möglicherweise einer bestimmten Taste des Tastenfeldes einem Buchstaben und/oder einer Ziffer zugeordnet ist. Durch Bestätigen einer Taste wird ein Buchstabe und/oder Ziffer in Form einer eindeutigen Kombination von Senden oder/und Nicht-Senden des spezifischen Anfragesignals wiedergegeben.
   Als Beispiel wird bei einer Umfrage nach einer Jahreszahl, die aus vier Zahlen besteht, gefragt, beispielsweise 1992. Ist das jeweilige Kommunikationsgerät in Form eines Mobilfunktelefons nach GSM-Standard realisiert und weist es ein 3 x 4 Tastenfeld auf, so bildet dieses Tastenfeld unter Anderem die Zahlen 0 bis 9 mit jeweils einer eigenen Taste ab. Bei Betätigen einer Taste wird eine eindeutige Kombination aus Senden und/oder Nichtsenden des spezifischen Anfragesignals FS erzeugt und übertragen. Durch Drücken der Tasten "1", "9", "9" und "2" wird das entsprechende Antwortsignal auf die Umfrage abgegeben.

Für die Praxis kann es zweckmäßig sein, ein oder mehrere Antwortsignale innerhalb des zeitlichen Antwortfensters zu korrigieren. Nach Figur 4 kann ein abgegebenes Antwortsignal AWS dadurch korrigiert werden, dass nach einer Wartezeit WT nach Abgabe eines Antwortsignals ein weiteres Antwortsignal das abgegebene Antwortsignal korrigiert. Im vorliegenden Beispiel wird zunächst das Antwortsignal AWS6 durch dreimaliges Abschicken des spezifischen Anfragesignals FS abgegeben. Nach der Wartezeit WT, wie z.B. 3 Sekunden, wird dieses durch das weitere Antwortsignal AWS7 überschrieben, das aus dem einmaligen Versenden des spezifischen Anfragesignals FS besteht. Die Antwortsignale AWS6, AWS7 wurden innerhalb des zeitlichen Antwortfensters TU abgegeben.

Gemäß einer weiteren alternativen Weiterbildung kann es zweckmäßig sein, ein oder mehrere abgegebene Antwortsignale innerhalb des zeitlichen Antwortfensters zu löschen. Nach Figur 5 wird hierbei als Löschsignal eine eindeutige Kombination aus Senden und/oder Nichtsenden des spezifischen Anfragesignals benutzt. Beispielsweise kann bei einer Umfrage, bei der ein Antwortsignal AWS8 durch einmaliges Senden des spezifischen Anfragesignals FS bereits abgegeben wurde, durch Abgabe des Löschsignals AWS9 zurückgenommen werden. Das Löschsignal AWS9 wird durch vier, in kurzer zeitlicher Abfolge, geschickte spezifische Anfragesignale FS realisiert.

Alternativ zur Auswertung des Antwortsignals durch das zum Senden berechtigte Kommunikationsgerät kann die Auswertung auch durch den PTT-Server erfolgen. Hierzu überträgt das zum Senden berechtigte Kommunikationsgerät nach Beendigung des zeitlichen Antwortfensters ein Ergebnisanfragesignal an den PTT-Server. Der PTT-Server wertet daraufhin eine oder mehrere Statusinformationen aus, die sich auf die Umfrage beziehen, und erstellt ein oder mehrere Umfrageergebnisse. Danach schickt er ein oder mehrere Umfrageergebnisse mittels mindestens eines Ergebnisantwortsignals an das zum Senden berechtigte Kommunikationsgerät. Alternativ kann der PTT-Server das Umfrageergebnis direkt an die an der Umfrage beteiligten Kommunikationsgeräte verteilen. Nach Figur 1 fordert das Kommunikationsgerät KE3 vom PTT-Server PS das Umfrageergebnis mittels des Ergebnisanfragesignals VSQ an. Daraufhin schickt der PTT-Server PS das Umfrageergebnis mittels des Ergebnisantwortsignals VEA an das Kommunikationsgerät KE3.

In einer weiteren Ausführungsform kann das zu Senden berechtigte Kommunikationsgerät den PTT-Server, hier z.B. PS, zur Übermittlung von aktuellen Statusinformationen während der Umfrage auffordern. Dies kann mittels der Umfragestatusnachricht, hier z.B. VSQ, geschehen. Während der Umfrage werden nun dem sendeberechtigten Kommunikationsgerät aktuell anfallende Statusinformationen zum Umfrage mitgeteilt. Diese Statusinformationen geben beispielsweise dasjenige Kommunikationsgerät an, das gerade sein Antwortsignal oder/und sein spezifisches Anfragesignal FS abgegeben hat.

In einer möglichen zusätzlichen Ausführungsform ist es möglich, während der Umfrage bestimmte Steuer- und/oder Abfragefunktionen bei den an der Umfrage beteiligten Kommunikationsgeräten einzuschränken bzw. zu erweitern. Beispielsweise kann es vorteilhaft sein, dass empfangsberechtigte Kommunikationsgeräte, wie z.B. KE1, KE2, keine Statusinformationen über den Verlauf der Umfrage vom PTT-Server, wie z.B. PS, abfragen können. Hierzu zählt möglicherweise die Abfrage, wie oft ein spezielles Kommunikationsgerät sein spezifisches Anfragesignal, wie z.B. FS, während des zeitlichen Antwortfensters, wie z.B. TU, abgeschickt hat.

Darüber hinaus kann es auch zweckmäßig sein, dass bestimmte Funktionen innerhalb des PTT-Servers gesperrt oder aktiviert werden. So kann es in der Praxis vorteilhaft sein, dass innerhalb des zeitlichen Antwortfensters, wie z.B. TU, keine zusätzlichen Kommunikationsgeräte durch den PTT-Server in die Umfrage aufgenommen werden.

## Patentansprüche

1. Verfahren zur Durchführung einer Umfrage unter mehreren beteiligten Kommunikationsgeräten (KE1, KE2, KE3),
**dadurch gekennzeichnet, dass**
nur jeweils einem dieser Kommunikationsgeräte (KE3) aufgrund seines spezifischen Anfragesignals (FS) ein exklusives Senderecht zur Übertragung von mindestens einer eine Fragestellung enthaltenden Nutznachricht (NN, NN2) für eine Berechtigungszeitdauer (BT) zugewiesen wird, während den anderen beteiligten Kommunikationsgeräten (KE1, KE2) lediglich ein Empfangsrecht von mindestens einer eine Fragestellung enthaltenden Nutznachricht (NN, NN2) zugeordnet wird,
wobei von dem zum Senden berechtigten Kommunikationsgerät (KE3) für die Umfrage unter den beteiligten Kommunikationsgeräten (KE1, KE2, KE3) ein zeitliches Antwortfenster (TU) festgelegt wird, innerhalb dem es dem jeweilig beteiligten Kommunikationsgerät (KE1, KE2, KE3) ermöglicht wird, sein jeweiliges Antwortsignal (AWS1, AWS2, AWS3) auf die Umfrage **dadurch** abzugeben, dass von ihm als Antwortsignal (AWS1, AWS2, AWS3) sein eigenes spezifisches Anfragesignal (FS) zur Anforderung des exklusiven Senderechts mindestens einmal geschickt wird.

2. Verfahren nach Anspruch 1,
**dadurch gekennzeichnet,**
**dass** als jeweiliges Kommunikationsgerät (KE1, KE2, KE3) ein Mobilfunkgerät nach dem UMTS-Standard oder dem GSM-Standard, ein Festnetzgerät nach dem ISDN-Standard oder als eine, an ein öffentliches Internet und/oder Intranet angeschlossene, Computereinheit verwendet wird.

3. Verfahren nach einem der vorhergehenden Ansprüche,
**dadurch gekennzeichnet,**
**dass** das Anfragesignal (FS) zur Anfrage des exklusiven Senderechts zur Übertragung von mindestens einer Nutznachricht (NN, NN2) durch das Betätigen einer Taste (ST1, ST2, ST3) am Kommunikationsgerät (KE1, KE2, KE3) ausgelöst wird.

4. Verfahren nach einem der vorhergehenden Ansprüche,
**dadurch gekennzeichnet,**
**dass** das Antwortsignal (AWS1, AWS2, AWS3) durch das Betätigen jeweils einer Taste (ST1, ST2, ST3) am jeweiligen Kommunikationsgerät (KE1, KE2, KE3) während des zeitlichen Antwortfensters (TU) generiert wird.

5. Verfahren nach einem der vorhergehenden Ansprüche,
**dadurch gekennzeichnet,**
**dass** durch eine Auswerteeinheit (AWE) die während des zeitlichen Antwortfensters (TU) das jeweiligen Antwortsignal (AWS1, AWS2, AWS3) ausgewertet wird.

6. Verfahren nach Anspruch 5,
**dadurch gekennzeichnet,**
**dass** die Auswerteeinheit (AWE) in dem zum Senden berechtigten Kommunikationsgerät (KE3) integriert ist.

7. Verfahren nach einem der vorhergehenden Ansprüche,
**dadurch gekennzeichnet,**
**dass** das Antwortsignal (AWS1, AWS2, AWS3), das durch das jeweilige Kommunikationsgerät (KE1, KE2, KE3) abgegeben wird, durch ein darauffolgendes, weiteres Antwortsignal (AWS1, AWS2, AWS3) innerhalb des zeitlichen Antwortfensters (TU) überschrieben wird.

8. Verfahren nach einem der vorhergehenden Ansprüche,
**dadurch gekennzeichnet,**
**dass** Steuer- und/oder Abfragefunktionen der an einer Umfrage beteiligten Kommunikationsgeräte (KE1, KE2, KE3) während der Umfrage eingeschränkt oder erweitert werden.

9. Zum Senden berechtigtes Kommunikationsgerät (KE3) zum Durchführen einer Umfrage unter mehreren beteiligten Kommunikationsgeräten (KE1, KE2, KE3)
**dadurch gekennzeichnet, dass**
das Kommunikationsgerät
eine Empfangseinheit (EME3) zum Entgegennehmen seines exklusiven Senderechts zur Übertragung von mindestens einer eine Fragestellung enthaltenden Nutznachricht (NN, NN2) aufgrund seines spezifischen Anfragesignals (FS) für eine Berechtigungszeitdauer (BT), während der den anderen beteiligten Kommunikationsgeräten (KE1, KE2) lediglich ein Empfangsrecht von mindestens einer eine Fragestellung enthaltenden Nutznachricht (NN, NN2) zuordenbar ist,
eine Verarbeitungseinheit (VAE3) zum Festlegen eines zeitlichen Antwortfensters (TU), innerhalb dem es jedem an der Umfrage beteiligten Kommunikationsgerät (KE1, KE2, KE3) ermöglicht ist, jeweils sein Antwortsignal (AWS1, AWS2, AWS3) auf die Umfrage **dadurch** abzugeben, dass von ihm als Antwortsignal (AWS1, AWS2, AWS3) sein eigenes spezifisches Anfragesignal (FS) zur Anforderung des exklusiven Senderechts mindestens einmal geschickt wird,
und eine Sendeeinheit (SEE3) aufweist, mittels der durch mindestens einmaliges Absenden eines eigenen spezifischen Anfragesignals (FS) zur Anforderung eines exklusiven Senderechts sein Antwortsignal (AWS1, AWS2, AWS3) absendbar ist.

10. Zum Empfang berechtigtes Kommunikationsgerät (KE1, KE2) zum Durchführen einer Umfrage unter mehreren beteiligten Kommunikationsgeräten (KE1, KE2, KE3),
**dadurch gekennzeichnet, dass**
das Kommunikationsgerät
eine Sendeeinheit (SEE1, SEE2) aufweist, mittels der durch mindestens einmaliges Absenden eines eigenen spezifischen Anfragesignals (FS) zur Anforderung eines exklusiven senderechts sein Antwortsignal (AWS1, AWS2, AWS3) absendbar ist.

## Claims

1. Method for carrying out a survey among a plurality of participating communication appliances (KE1, KE2, KE3),
**characterized in that**
just a respective one of these communication appliances (KE3) is assigned an exclusive transmission right for transmitting at least one useful message (NN, NN2), containing questioning, for an authorization period (BT) on the basis of its specific request signal (FS), while the other participating communication appliances (KE1, KE2) are merely allocated a reception right for at least one useful message (NN, NN2) containing questioning,
where the communication appliance (KE3) authorized for transmission stipulates a timed response window (TU) for the survey among the participating communication appliances (KE1, KE2, KE3), within which the respective participating communication appliance (KE1, KE2, KE3) is allowed to send its respective response signal (AWS1, AWS2, AWS3) for the survey by sending, as its response signal (AWS1, AWS2, AWS3), its own specific request signal (FS) for requesting the exclusive transmission right at least once.

2. Method according to Claim 1,
**characterized**
**in that** the respective communication appliance (KE1, KE2, KE3) used is a mobile radio based on the UMTS standard or the GSM standard, a landline appliance based on the ISDN standard or a computer unit connected to a public Internet and/or Intranet.

3. Method according to one of the preceding claims,
**characterized**
**in that** the request signal (FS) for requesting the exclusive transmission right for transmitting at least one useful message (NN, NN2) is triggered by pressing a key (ST1, ST2, ST3) on the communication appliance (KE1, KE2, KE3).

4. Method according to one of the preceding claims,
**characterized**
**in that** the response signal (AWS1, AWS2, AWS3) is generated by pressing a respective key (ST1, ST2, ST3) on the respective communication appliance (KE1, KE2, KE3) during the timed response window (TU).

5. Method according to one of the preceding claims,
**characterized**
**in that** an evaluation unit (AWE) evaluates the respective response signal (AWS1, AWS2, AWS3) during the timed response window (TU).

6. Method according to Claim 5,
**characterized**
**in that** the evaluation unit (AWE) is integrated in the communication appliance (KE3) authorized for transmission.

7. Method according to one of the preceding claims,
**characterized**
**in that** the response signal (AWS1, AWS2, AWS3) which is sent by the respective communication appliance (KE1, KE2, KE3) is overwritten by a subsequent, further response signal (AWS1, AWS2, AWS3) within the timed response window (TU).

8. Method according to one of the preceding claims,
**characterized**
**in that** control and/or interrogation functions for the communication appliances (KE1, KE2, KE3) participating in a survey are restricted or extended during the survey.

9. Communication appliance (KE3) authorized for transmission for the purpose of carrying out a survey among a plurality of participating communication appliances (KE1, KE2, KE3),
**characterized in that**
the communication appliance has
a reception unit (EME3) for receiving its exclusive transmission right for transmitting at least one useful message (NN, NN2) containing questioning on the basis of its specific request signal (FS) for an authorization period (BT), during which the other participating communication appliances (KE1, KE2) can merely be allocated a reception right for at least one useful message (NN, NN2) containing questioning,
a processing unit (VAE3) for stipulating a timed response window (TU) within which any communication appliance (KE1, KE2, KE3) participating in the survey is allowed to send its respective response signal (AWS1, AWS2, AWS3) for the survey by sending, as its response signal (AWS1, AWS2, AWS3), its own specific request signal (FS) for requesting the exclusive transmission right at least once,
and a transmission unit (SEE3) which can be used to send its response signal (AWS1, AWS2, AWS3) by sending its own specific request signal (FS) for requesting an exclusive transmission right at least once.

10. Communication appliance (KE1, KE2) authorized for reception for the purpose of carrying out a survey among a plurality of participating communication appliances (KE1, KE2, KE3),
**characterized in that**
the communication appliance has
a transmission unit (SEE1, SEE2) which can be used to send its response signal (AWS1, AWS2, AWS3) by sending its own specific request signal (FS) for requesting an exclusive transmission right at least once.

## Revendications

1. Procédé pour la réalisation d'une enquête entre plusieurs appareils de communication (KE1, KE2, KE3) concernés,
**caractérisé en ce que**
un droit d'émission exclusif pour la transmission d'au moins un message utile (NN, NN2) contenant une question est attribué pour une durée d'autorisation (BT) à chaque fois seulement à l'un de ces appareils de communication (KE3) sur la base de son signal de demande (FS) spécifique, alors que seul un droit de réception d'au moins un message utile (NN, NN2) contenant une question est attribué aux autres appareils de communication (KE1, KE2) concernés,
dans lequel l'appareil de communication (KE3) autorisé à émettre définit pour l'enquête entre les appareils de communication (KE1, KE2, KE3) concernés une fenêtre temporelle de réponse (TU) dans les limites de laquelle l'appareil de communication (KE1, KE2, KE3) respectivement concerné est en mesure d'envoyer son signal de réponse (AWS1, AWS2, AWS3) respectif à l'enquête par le fait qu'il envoie au moins une fois comme signal de réponse (AWS1, AWS2, AWS3) son propre signal de demande (FS) spécifique pour la demande du droit d'émission exclusif.

2. Procédé selon la revendication 1,
**caractérisé en ce que**
comme appareil de communication (KE1, KE2, KE3) respectif, on utilise un appareil de téléphonie mobile selon le standard UMTS ou le standard GSM, un appareil de réseau fixe selon le standard ISDN ou comme une unité ordinateur raccordé à Internet et/ou Intranet public.

3. Procédé selon l'une quelconque des revendications précédentes,
**caractérisé en ce que**
le signal de demande (FS) pour la demande du droit d'émission exclusif pour la transmission d'au moins un message utile (NN, NN2) est déclenché par l'actionnement d'une touche (ST1, ST2, ST3) sur l'appareil de communication (KE1, KE2, KE3).

4. Procédé selon l'une quelconque des revendications précédentes,
**caractérisé en ce que**
le signal de réponse (AWS1, AWS2, AWS3) est généré par l'actionnement de respectivement une touche (ST1, ST2, ST3) sur l'appareil de communication (KE1, KE2, KE3) respectif pendant la fenêtre temporelle de réponse (TU) dans le temps.

5. Procédé selon l'une quelconque des revendications précédentes,
**caractérisé en ce que**
le signal de réponse (AWS1, AWS2, AWS3) respectif est analysé par une unité d'analyse (AWE) pendant la fenêtre temporelle de réponse (TU).

6. Procédé selon la revendication 5,
**caractérisé en ce que**
l'unité d'analyse (AWE) est intégrée dans l'appareil de communication (KE3) autorisé à émettre.

7. Procédé selon l'une quelconque des revendications précédentes,
**caractérisé en ce que**
le signal de réponse (AWS1, AWS2, AWS3), qui est émis par le terminal de communication (KE1, KE2, KE3) respectif, est écrasé par un autre signal de réponse (AWS1, AWS2, AWS3) consécutif dans les limites de la fenêtre temporelle de réponse (TU).

8. Procédé selon l'une quelconque des revendications précédentes,
**caractérisé en ce que**
des fonctions de commande et/ou d'interrogation des appareils de communication (KE1, KE2, KE3) concernés par une enquête sont limitées ou élargies pendant l'enquête.

9. Appareil de communication (KE3) autorisé à émettre pour effectuer une enquête entre plusieurs appareils de communication (KE1, KE2, KE3) concernés,
**caractérisé en ce que**
l'appareil de communication comporte
une unité de réception (EME3) pour recevoir son droit d'émission exclusif pour la transmission d'au moins un message utile (NN, NN2) contenant une question suite à son signal de demande (FS) spécifique pour une durée d'autorisation (BT), pendant laquelle uniquement un droit de réception d'au moins un message utile (NN, NN2) contenant une question peut être attribué aux autres appareils de communication (KE1, KE2) concernés,
une unité de traitement (VAE3) pour déterminer une fenêtre temporelle de réponse (TU), dans les limites de laquelle chaque appareil de communication (KE1, KE2, KE3) concerné par l'enquête est en mesure d'envoyer respectivement son signal de réponse (AWS1, AWS2, AWS3) à l'enquête par le fait qu'il envoie au moins une fois comme signal de réponse (AWS1, AWS2, AWS3) son propre signal de demande (FS) spécifique pour la demande du droit d'émission exclusif,
et une unité d'émission (SEE3) au moyen de laquelle son signal de réponse (AWS1, AWS2, AWS3) peut être envoyé par au moins un unique envoi d'un signal de demande (FS) propre spécifique, pour la demande d'un droit d'émission exclusif.

10. Appareil de communication (KE1, KE2) autorisé à recevoir pour la mise en oeuvre d'une enquête entre plusieurs appareils de communication (KE1, KE2, KE3) concernés,
**caractérisé en ce que**
l'appareil de communication
comporte une unité d'émission (SEE1, SEE2) au moyen de laquelle son signal de réponse (AWS1, AWS2, AWS3) peut être envoyé par au moins un unique envoi d'un signal de demande (FS) propre spécifique, pour la demande d'un droit d'émission exclusif.
